Europäisches Patentamt

European Patent Office

Office européen des brevets

(11) Veröffentlichungsnummer: **0 112 965
B1**

(12) **EUROPÄISCHE PATENTSCHRIFT**

(45) Veröffentlichungstag der Patentschrift:
07.12.88

(21) Anmeldenummer: **83108074.2**

(22) Anmeldetag: **16.08.83**

(51) Int. Cl.⁴: **F 16 J 15/56**

(54) Dichtung.

(30) Priorität: **25.11.82 DE 3243597**

(43) Veröffentlichungstag der Anmeldung:
**11.07.84 Patentblatt 84/28**

(45) Bekanntmachung des Hinweises auf die Patenterteilung:
**07.12.88 Patentblatt 88/49**

(84) Benannte Vertragsstaaten:
**AT DE FR GB IT SE**

(56) Entgegenhaltungen:
**FR-A- 2 129 373
FR-A- 2 330 927**

(73) Patentinhaber: **Firma Carl Freudenberg, Höhnerweg 4,
D-6940 Weinheim/Bergstrasse (DE)**

(72) Erfinder: **Bähr, Günther, Seckenrain 37,
D-6948 Waldmichelbach (DE)**
Erfinder: **Schumacher, Herbert, Am Wetzelsberg 55,
D-6941 Gorxheimertal (DE)**

(74) Vertreter: **Weissenfeld-Richters, Helga, Dr.,
Höhnerweg 2, D-6940 Weinheim/Bergstrasse (DE)**

ACTORUM AG

**Beschreibung**

Die Erfindung betrifft eine Dichtung für eine eine Schwenkbewegung und/oder radiale Verlagerungen sowie eine Drehbewegung ausführende Welle nach Oberbegriff von Anspruch 1. Die Welle führt primär eine Drehbewegung um ihre Achse aus, wobei aber auch Schwenkbewegungen, axiale und/oder radiale Verlagerungen auftreten können, die die Dichtwirkung der Dichtung nicht beeinträchtigen sollen.

Eine solche Dichtung wird in DE-B-1 675 397 beschrieben. Der Dichtring ruht dabei mit einer sich achsparallel erstreckenden Stützfläche auf dem abzudichtenden Maschinenteil, was eine starre, relative Zuordnung der Dichtlippe bedingt. Beim Auftreten von Winkelverlagerungen zwischen der Rotationsachse des abgedichteten Maschinenteiles und der Rotationsachse des Gehäuses, an dem die Dichtlippe anliegt, sind deshalb Undichtigkeiten die zwangsläufige Folge.

Die Kraft, mit der die Dichtlippe an der zugeordneten Innenwandung des Gehäuses anliegt, ist ausschliesslich abhängig von der gegenseitigen Zuordnung beider Teile. Diese bedürfen daher beide während der Montage einer aufwendigen Justierung, was aus Kostengründen weniger befriedigend ist. Der Dichtring ist für Anwendungsfälle, in denen betriebsbedingte axiale Verlagerungen des abzudichtenden Maschinenteiles auftreten, nicht geeignet.

Aus der FR-A-2 129 373 ist eine Kolbendichtung bekannt, die mit einer durch zwei einander durchschneidende Kegelflächen gebildeten Dichtkante gleitend an der Zylinderwandung anliegt. Statisch wirkende Dichtungen werden nicht erwähnt.

Die FR-A-2 330 927 nimmt Bezug auf eine Stangendichtung, bei der der Dichtring die abzudichtende Stange mit mehreren, in axialem Abstand voneinander angeordneten Dichtlippen berührt. Winkelverlagerungen der Stange in bezug auf die Dichtung haben eine veränderte Anpressung der Dichtlippen zur Folge, was sich nachteilig auf das erzielte Abdichtungsergebnis auswirkt.

Der Erfindung liegt die Aufgabe zugrunde, einen Dichtring der eingangs genannten Art derart weiter zu entwickeln, dass bei Vermeidung aufwendiger Justierarbeiten bei der Montage eine gute Funktionssicherheit auch dann gewährleistet ist, wenn radiale, axiale und Winkelverlagerungen zwischen den Rotationsachsen der Welle und des Gehäuses auftreten und einander überlagern.

Diese Aufgabe wird erfindungsgemäss dadurch gelöst, dass der Dichtring an der gegenüberliegenden Seite des Gehäuses anliegt und dass die Stützfläche von zwei einander kegelig durchbrechende Flächen gebildet wird.

Die Stützfläche des vorgeschlagenen Dichtringes hat nur eine kurze axiale Erstreckung, und diese ist das Ergebnis der bei der Montage auftretenden, elastischen Deformierung. Sie hat keinen nennenswerten Einfluss auf die Führung des Dichtringes an sich, und die relative Zuordnung der Dichtlippe zu der Innenwandung des aufnehmenden Gehäuses ist dadurch in allen Betriebssituationen vollkommen gleichbleibend. Auch extreme Winkelverlagerungen zwischen der Rotationsachse des abzudichtenden Maschinenteiles, d.h. der Welle, und derjenigen des Gehäuses haben nachteilige Veränderungen der Anpresskraft der Dichtlippe oder von deren relativer Zuordnung zu der Innenwandung des Gehäuses nicht zur Folge.

Für die Montage der vorgeschlagenen Dichtung genügen übliche Einbauwerkzeuge. Eine Justierung ist nicht erforderlich.

Die durch einander kegelig durchbrechende Flächen gebildete Stützfläche vermag sich auch relativ unebenen Oberflächen ausgezeichnet anzupassen. Das abzudichtende Maschinenteil, d.h. die Welle, bedarf daher nicht mehr der bisher notwendigen Feinstbearbeitung seiner Oberfläche.

Der Dichtring kann auf der der zweiten Innenwandung zugewandten Seite durch eine Polsterschicht aus axial vorspringenden Säulen, Rippen und/oder einem weichen Schaumstoff gebildet werden. Die Anpresskraft der Dichtlippe erfährt hierdurch eine über lange Zeit konstante Vergleichmässigung, wodurch der natürliche Verschleiss kompensiert wird. Bei Verwendung von Polyurethanweichschäumen sind vor allem Raumgewichte von 30 bis 70 kg/m$^3$ in Erwägung zu ziehen.

In Anwendungsfällen, in denen besonders grosse Relativbewegungen und -verlagerungen zwischen der Welle und dem Gehäuse auftreten, hat es sich als vorteilhaft bewährt, wenn das Gehäuse in der Ausnehmung eines sich parallel zu dem abgedichteten Maschinenteil, d.h. der Welle, erstreckenden Schlauches aus einem flexiblen Werkstoff gelagert ist. Der Schlauch kann aus einem elastischen Werkstoff bestehen, und die Ausnehmung kann in diesem Falle sich in Umfangsrichtung erstreckende Rippen zur Abdichtung und elastischen Lagerung des Gehäuses aufweisen.

Die Stützfläche wird zweckmässigerweise nur durch zwei einander kegelig durchbrechende Flächen gebildet, wobei die dem abzudichtenden Medium zugewandte Kegelfläche mit der Rotationsachse der Welle einen Winkel zwischen 10 und 30° einschliessen soll, die gegenüberliegende Kegelfläche hingegen einen Winkel von 15 bis 60°. Die Anpressung an das abgedichtete Maschinenteil, d.h. die Welle, ermöglicht dessen Axialverlagerung, jedoch keine nennenswerte Relativverdrehung bei Gewährleistung einer guten Dichtheit. Auch unrunde Maschinenteile beispielsweise solche mit quadratischem oder rechteckigem Profil, können bei entsprechender Ausbildung der Stützfläche sicher abgedichtet werden. Der Dichtring kann aus jedem einschlägig verwendeten Werkstoff bestehen.

Der Gegenstand der vorliegenden Erfindung wird nachfolgend anhand der in der Anlage beigefügten Zeichnung weiter verdeutlicht. Es zeigt:

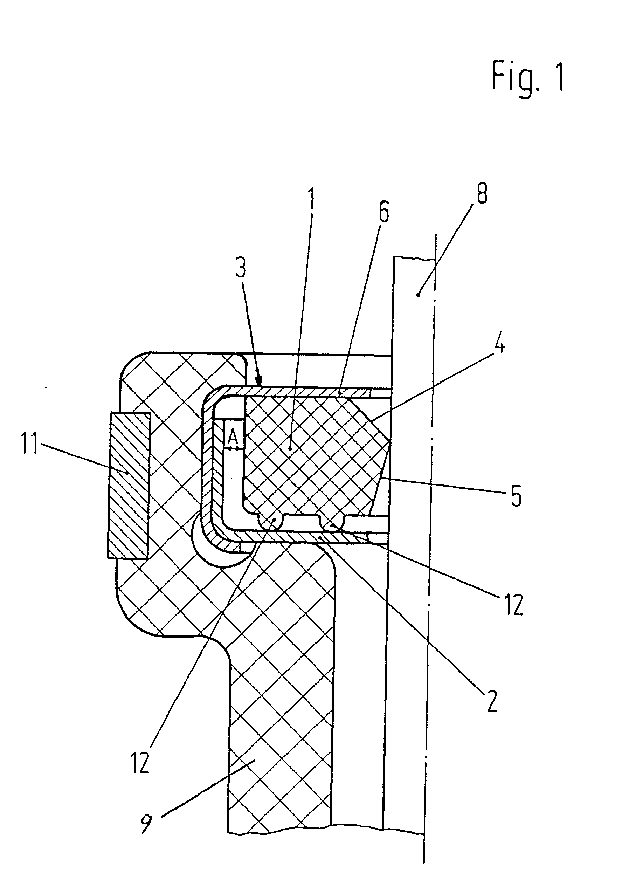

Figur 1 eine in der Ausnehmung eines Schlauches gelagerte Ausführung, bei der die Stützfläche durch zwei einander kegelig durchbrechende Flächen gebildet wird.

Die in Figur 1 gezeigte Dichtung ist für den von einer Welle 8 gebildeten Steuerhebel des Rotorblattes eines Hubschraubers bestimmt. Dieser führt eine hin- und hergehende Schwenkbewegung aus und ist betriebsbedingt erheblichen Deformierungen und Schwingungen ausgesetzt. Seine Abdichtung gegenüber der Taumelscheibe ist daher ausserordentlich problematisch.

Bei der erfindungsgemäss vorgeschlagenen Ausführung ist der Dichtring 1 in einem axialen Abstand von dem eigentlichen Maschinengehäuse in der Ausnehmung eines Schlauches 9 gelagert. Dieser besteht aus Gummi mit einer Härte Shore A von 90. Er ist dadurch so flexibel, dass er den Biegebewegungen des abzudichtenden Steuerhebels bzw. der Welle 8 ohne weiteres zu folgen vermag.

Die Dichtung ist in die stirnseitige Ausnehmung des Schlauches 9 eingeknüpft und sie wird in dieser Position durch einen aussen aufgelegten und angespannten Schlauchbinder 11 gehalten.

Die Dichtung besteht aus einem zweiteiligen Gehäuse 3 und dem darin eingeknüpften Dichtring 1. Die beiden Teile des Gehäuses 3 bestehen aus tiefgezogenem Stahlblech. Sie haben ein winkelförmiges Profil, sind durch Zusammenfügen zu dem U-förmig nach innen geöffneten Gehäuse 3 vereint und durch eine Umbördelung verbunden. Mit 2 ist eine sich in radialer Richtung erstreckende erste Innenwand und mit 6 eine dieser gegenüberliegende Seite des Gehäuses 3 bezeichnet.

Der in dem Gehäuse 3 enthaltene Dichtring 1 hat einen radialen Abstand A von dessen Innenseite. Der Dichtring 1 vermag sich dadurch in radialer Richtung relativ zu dem Gehäuse 3 zu bewegen.

Der Dichtring 1 besteht aus Gummi einer Härte Shore A von 90. Seine auf dem Steuerhebel bzw. der Welle 8 aufliegende Stützfläche wird durch die beiden einander kegelig durchbrechenden Flächen 4, 5 gebildet. Die der Aussenluft zugewandte Fläche 4 schliesst mit der Rotationsachse der Welle 8 in neutraler Stellung einen Winkel von 45° ein, die dem abgedichteten Medium zugewandte Gegenfläche 5 mit der Rotationsachse der Welle 8 einen Winkel von 15°.

Der Dichtring 1 folgt der Drehbewegung des Steuerhebels bzw. der Welle 8, und er liegt in axialer Richtung einerseits mit den beiden konzentrisch ineinander angeordneten Dichtlippen 12 und andererseits mit einer Planfläche an der in radialer Richtung nach innen zeigenden schenkelförmigen Innenwand bzw. Seite 2, 6 des Gehäuses 3 an. Er erhält hierdurch eine nachgiebige, jedoch eine ausserordentlich präzise Führung in bezug auf das Gehäuse 3, wodurch eine Veränderung der relativen Zuordnung bzw. der Anpressung der dynamischen Dichtlippen 12 auch dann nicht zu befürchten ist, wenn extreme Winkelverlagerungen des Steuerhebels bzw. der Welle 8 auftreten.

Eine weitere Verbesserung hinsichtlich der Einleitung von Schwingungen ergibt sich, wenn der Schaft des Schlauches 9 faltenbalgähnlich ausgebildet ist.

## Patentansprüche

1. Dichtung für eine eine Drehbewegung um ihre Achse ausführende sowie Schwenkbewegungen, axiale und/oder radiale Verlagerungen ausführende Welle (8) mit einem Dichtring (1) aus elastischem Werkstoff, der mit einer Stützfläche ruhend auf der Welle (8) gelagert ist und mit wenigstens einer sich in axialer Richtung erstreckenden, umlaufenden Dichtlippe (12) an einer zugeordneten, sich in radialer Richtung erstreckenden ersten Innenwand (2) eines U-förmig nach innen geöffneten Gehäuses (3) anliegt, das eine der ersten Innenwand (2) gegenüberliegende Seite (6) hat, wobei zwischen dem Dichtring (1) und dem Gehäuse (3) ein radiales Spiel (A) vorhanden ist, dadurch gekennzeichnet, dass der Dichtring (1) an der gegenüberliegenden Seite (6) des Gehäuses (3) anliegt, und dass die Stützfläche von zwei einander kegelig durchbrechende Flächen (4, 5) gebildet wird.

2. Dichtung nach Anspruch 1, dadurch gekennzeichnet, dass die einander kegelig durchbrechenden Flächen (4, 5) auf der Seite des abzudichtenden Mediums mit der Rotationsachse der Welle (8) einen Winkel von 10 bis 30° einschliessen und auf der Gegenseite einen Winkel von 15 bis 60°.

## Claims

1. Seal for a shaft (8) rotating about its axis and performing tumbling motions, axial and/or radial shifts comprising a sealing ring (1) made of elastic material based on the shaft (8) with a supporting surface and with at least one surrounding packing washer (12), that stretches in one axial direction, butting against the first inner wall, stretching in radial direction, of a housing, opened inwards in a U-shaped way, which has a side (6) facing the first inner wall, a play existing between the sealing ring (1) and the housing (3) characterized in that the sealing ring (1) butts against the opposite side (6) of the housing (3) and that the supporting surface is formed by two surfaces (4, 5) delimiting each other in a conical way.

2. Seal according to claim 1, characterized in that on the side of the medium to be sealed the surfaces (4, 5) delimiting each other in a conical way and the rotation axis of the shaft (8) form an angle between 10 and 30° and on the opposite side an angle between 15 and 60°.

## Revendications

1. Joint d'étanchéité pour un arbre (8) exécutant un mouvement de rotation autour de son axe, ainsi que des mouvements oscillants et des déplacements axiaux et/ou radiaux, avec une bague d'étanchéité (1) en matériau élastique qui repose par une surface d'appui sur l'arbre (8) et qui appuie, par au moins une lèvre d'étanchéité (12) périphérique s'étendant en direction axiale, sur une paroi intérieure (2) d'un corps (3) en forme de «U» ouvert vers l'intérieur, cette première paroi s'étendant en direction radiale et ce corps ayant un côté (6) opposé à la première paroi intérieure (2), tandis qu'il existe un jeu radial (A) entre la bague d'étanchéité (1) et le corps (3), caractérisé en ce que la bague d'étanchéité (1) appuie sur la face (6) opposée du corps (3) et que la surface d'appui est constituée de deux surfaces coniques sécantes (4, 5).

2. Joint d'étanchéité selon la revendication 1, caractérisé en ce que les surfaces coniques sécantes (4, 5) forment, du côté du fluide à rendre étanche, un angle de 10 à 30° avec l'axe de rotation de l'arbre (8) et, de l'autre côté, un angle de 15 à 60°.

Fig. 1